# EUROPEAN PATENT SPECIFICATION

(11) **EP 2 402 406 B1**
(45) Date of publication and mention of the grant of the patent: **14.05.2014**
(21) Application number: 10746475.2
(22) Date of filing: 26.02.2010
(51) Int. Cl.: C09D 133/06, C09D 127/12, C09D 5/00, C09D 7/12, G02F 1/00

(54) **OUTSTANDINGLY ABRASION RESISTANT AND POLLUTION RESISTANT COATING COMPOSITION AND COATING FILM**
BESCHICHTUNGSZUSAMMENSETZUNG VON AUSSERORDENTLICH HOHER ABRIEB- UND VERSCHMUTZUNGSFESTIGKEIT SOWIE BESCHICHTUNGSFILM DARAUS
COMPOSITION DE REVÊTEMENT EXCEPTIONNELLEMENT RÉSISTANTE À L'ABRASION ET À LA POLLUTION ET FILM DE REVÊTEMENT L'UTILISANT

(30) Priority: 27.02.2009 KR 20090017229; 26.02.2010 KR 20100017432
(43) Date of publication of application: 04.01.2012
(73) Proprietor: LG Chem, Ltd., Youngdungpo-gu Seoul 150-721 (KR)
(72) Inventor: CHANG, Yeong-Rae, Daejeon 305-750 (KR); KANG, Joon-Koo, Daejeon 302-793 (KR); HONG, Kyung-Ki, Cheongwon-gun Chungcheongbuk-do 363-883 (KR); JUNG, Soon-Hwa, Daejeon 305-755 (KR); KIM, Hye-Min, Daejeon 302-828 (KR); LEE, Soo-Kyoung, Cheongju-si Chungcheongbuk-do 360-567 (KR); YOO, Eun-Sang, Cheongwon-gun Chungcheongbuk-do 363-883 (KR); KIM, Sung-Su, Cheongwon-gun Chungcheongbuk-do 363-883 (KR); HONG, Young-Jun, Daejeon 305-380 (KR); KIM, Ju-Young, Gyeonggi-do, 445-755 (KR)
(74) Representative: Goddar, Heinz J.
(86) International application number: PCT/KR2010/001261
(87) International publication number: WO 2010/098636

(56) References cited:
- WO-A2-2009/069974
- JP-A- 2005 179 613
- JP-A- 2005 266 051
- KR-A- 20060 030 784
- KR-A- 20060 031 941
- KR-A- 20080 005 722
- KR-A- 20080 005 723
- KR-A- 20090 056 913
- US-A1- 2005 158 504

## Description

### [Technical Field]

The present invention relates to a coating composition and a coating film that are capable of being applied to displays such as TVs, monitors for computers, laptops or laptop computers, mobile phones and the like. More particularly, the present invention relates to a coating composition and a coating film that have excellent abrasion resistance, and excellent contamination resistance such as fingerprint trace removability and scribbling resistance to easily remove contaminants of oil components such as fingerprints or scribbles, and in particular, excellent dust removability.

This application claims priority from Korean Patent Application Nos. 10-2009-0017229 and 10-2010-0017432 filed on February 27, 2009 in the Korean Intellectual Property Office, the disclosure of which is incorporated herein by reference in its entirety.

### [Background Art]

In the case of various displays, there are problems in that an image is easily deformed or the quality of appearance is reduced by fingerprints. To solve the problems, fluorine-containing surface treatment agents can be used to prepare a coating composition and a coating film having excellent contamination resistance. However, upon abrasion or friction, these fluorine-containing surface treatment agents generate static electricity to deteriorate dust removability or abrasion resistance.

In the related art, some methods for realizing the surface treatment to provide hard coating films with conductivity have been suggested as follows.

As a first method, there is a method for coating a substrate with an antistatic layer applied with conductive inorganic particles, and coating with a hard coating layer consecutively. At this time, the applied antistatic layer has a thickness of 0.1 to 1.0 µm and the hard coating layer has a thickness of 1 to several tens µm. The hard coating layer is required to have abrasion resistance, and the antistatic layer should not deteriorate the light transmission. However, lamination of the above two layers is difficult to satisfy all of antistatic property, abrasion resistance, and light transmission.

As a second method, there is a method for providing the hard coating layer simultaneously with antistatic property. Conductive inorganic particles are dispersed in a hard coating solution containing an acrylate or silicone resin to impart both abrasion resistance and antistatic properties in a single application. At this time, the conductive inorganic particles should have a diameter of 100 nm or less to prevent a reduction in light transmission and haze growth. In addition, the weight ratio of conductive inorganic particles and resins has to be properly controlled. If the weight ratio of conductive inorganic particles is high, haze growth or reduction in abrasion resistance occurs. If the weight ratio of conductive inorganic particles is low, the sufficient antistatic property may not be achieved.

WO 2009/069974 A2 discloses a coating composition comprising a binder containing a UV-curable functional group; a compound containing a fluorine UV-curable functional group; a photoinitiator; and nano-sized particles. Inorganic particles formed using a material selected from ITO, ATO and AZO are not disclosed.

JP 2005-266051 A discloses an antireflection film with a hard coat layer containing active energy beam setting resin, a middle refractive index layer containing conductive metallic oxide particles, a high refractive index layer containing titanium oxide particulate, and low re-fractive index layer containing hollow-silica-based particulate having an outer shell layer and having a porous or hollow inside.

US 2005/158504 A1 provides hard coat agent composition comprising a fluorine-containing block copolymer, a fluorine-containing polyether compound comprising an active energy ray-reactive group and an active energy ray-curable compound.

### [Disclosure]

### [Technical Problem]

Therefore, an object of the present invention is to provide a coating composition and a coating film that are capable of simultaneously providing abrasion resistance and contamination resistance by a single coating method, maintaining properties of abrasion resistance and contamination resistance while a film is rubbed, and having excellent dust removability and antistatic property.

### [Technical Solution]

The present invention provides a coating composition according to claim 1.

Further, the present invention provides a coating film according to claim 13 prepared by using the coating composition according to the present invention.

Further, the present invention provides a method for producing a coating film, comprising the steps of coating the coating composition according to the present invention on a substrate; and drying and photocuring the coated coating composition.

Further, the present invention provides a display device that includes the coating film according to the present invention.

Preferred embodiments are disclosed in the subclaims.

### [Advantageous Effects]

According to the present invention, provided are a coating composition and a coating film that have excellent abrasion resistance, and excellent contamination resistance such as fingerprint trace removability and scribbling resistance to easily remove contaminants of oil components such as fingerprints or scribbles, and in particular, excellent dust removability.

In addition, the coating film can be provided with both abrasion resistance and contamination resistance by a single coating method of the coating composition according to the present invention, and the properties of abrasion resistance and contamination resistance can be maintained while the coating film according to the present invention is rubbed.

### [Best Mode]

Hereinafter, a better understanding of the present invention may be obtained in light of the following Examples which are set forth to illustrate, but are not to be construed to limit the present invention.

In the present Example, as described below, after the coating composition and the coating film were produced, physical properties of abrasion resistance, fingerprint trace removability, scribbling resistance and surface energy were evaluated by using the following method.

The abrasion resistance of the coating film was evaluated by pencil hardness at 500g load.

The fingerprint trace removability of the coating film was evaluated by using the following method. An artificial fingerprint solution was produced and applied to a rubber stamp. Next, the rubber stamp was pressed on the surface of the coating film and dried for 10 min. Subsequently, the fingerprint was removed from the coating film by using a gauze towel and the remaining fingerprint was evaluated by the naked eye. At this time, the used artificial fingerprint solution was prepared by JIS K 2246.

In respects to the scribbling resistance of the coating film, the pen mark was examined by the naked eye after two 5 cm lines were drawn by using the oily pen and wiped using the very fine fiber dustless cloth. This procedure was repeated until the pen mark was observed, and the number of repetition was recorded.

The surface energy was evaluated by measuring the contact angle of water and diiodomethane using DSA 100 manufactured by KRUSS.

### Example 1

100 g of dipentaerythritol hexaacrylate, 10 g of a perfluoro group-containing monofunctioanl acrylate having the structure of Formula 1 (X=F, Y=F, Z=H, h=6, i=1, free of other components), 5 g of the photoinitiator Irgacure 184, 10 g of the silica particles, having the average particle diameter of 20 nm, that were subjected to surface treatment with methacryloxy propyltrimethoxy silane, 10 g of antimony doped zinc oxide (AZO, manufactured by Nissan, particle diameter of about 20 nm), and 100 g of methyl ethyl ketone were mixed with each other, and the coating composition was agitated for about 1 hr so that they were sufficiently mixed with each other. The coating composition that was produced by using the above method was subjected to 2-roll reverse coating so that the curing thickness was 10 µm on the triacetylcellulose film. The coated film was dried at 60°C in an oven for 2 min, and UV energy was irradiated thereon in the intensity of 1 J/cm² using the polymerization mercury lamp to produce the abrasion resistant coating film that had the fingerprint trace removability.

### Example 2

The coating film was produced in the same manner as Example 1, except for using 20 g of antimony doped zinc oxide (AZO, manufactured by Nissan, particle diameter of about 20 nm) used in Example 1.

### Example 3 (not according to the invention)

The coating film was produced in the same manner as Example 1, except for using 20 g of tin oxide (manufactured by Nissan, particle diameter of about 20 nm) instead of antimony doped zinc oxide.

### Example 4

The coating film was produced in the same manner as Example 1, except for using 20 g of tin-doped indium oxide (ITO, manufactured by AMP, particle diameter of about 100 nm) instead of antimony doped zinc oxide.

### Comparative Example 1

The coating film was produced in the same manner as Example 1, except for not using antimony doped zinc oxide (AZO) used in Example 1.

### Comparative Example 2

The coating film was produced in the same manner as Example 1, except for using 100 g of antimony doped zinc oxide (AZO) used in Example 1.

### Comparative Example 3

The coating film was produced in the same manner as Example 1, except for not using silica.

### Comparative Example 4

The coating film was produced in the same manner as Example 1, except for using approximately 0.5 g of antimony doped zinc oxide (AZO) used in Example 1.

The surface resistivity, pencil hardness, the fingerprint trace removability, surface energy and scribbling resistance of the coating film that was produced by the above method were evaluated. The evaluated results are described in the following Table 1.

**[Table 1]**

| Physical property | Example 1 | Example 2 | Example 3 | Example 4 | Comparative Example1 | Comparative Example2 | Comparative Example3 | Comparative Example4 |
|---|---|---|---|---|---|---|---|---|
| Pencil hardness | 4H | 4H | 4H | 4H | 4H | 3H | 2H | 4H |
| Surface resistivity (Ω/square) | 4.2×10¹² | 6.5×10¹⁰ | 5.4×10¹¹ | 1.1×10¹⁰ | 10¹³ or more (not detectable) | 2.3×10⁷ | 4.7×10¹² | 10¹³ or more (not detectable) |
| Fingerprint trace removability | good | good | good | good | good | poor | good | good |
| Scribbling resistance (frequency) | 300 times | 500 times | 600 times | 500 times | 200 times | 100 times | 250 times | 300 times |
| Surface energy (mN/m) | 13.4 | 13.8 | 13.6 | 13.6 | 13.1 | 14.1 | 13.3 | 13.2 |

As shown in Table 1, it can be seen that the coating film including all of the nano-sized particles and the conductive inorganic particles had more improved abrasion resistance and antistatic property (see Examples 1 to 4, Comparative Example 1, and Comparative Example 3).

In addition, even though the conductive inorganic particles were included, the excessive amount of conductive inorganic particles (Comparative Example 2) problematically reduced the abrasion resistance and contamination resistance. When no (Comparative Example 1) or a small amount (Comparative Example 4) of conductive inorganic particles was included, the antistatic property was found to be poor.

### [Mode for Invention]

Hereinafter, the present invention will be described in detail.

The coating composition according to the present invention comprises a) a binder resin containing a UV-curable functional group; b) a compound containing a fluorine UV-curable functional group; c) a photoinitiator; d) nano-sized particles; and e) conductive inorganic particles.

The a) binder resin containing a UV-curable functional group is a main component that is capable of providing the abrasion resistance to a coating film, and the b) compound containing a fluorine UV-curable functional group is a component that is useful to reduce and remove contamination by oil components such as fingerprints.

The a) binder resin containing a UV-curable functional group includes multi-functional or mono-functional monomers or oligomers. It is required that the binder has the high crosslinking density for the improvement of the abrasion resistance, but it needs to appropriately control the density of the binder since cracks or wrong attachment may occur due to the curing shrinkage of the coating film.

The functional group that may be included in the a) binder resin containing a UV-curable functional group is not particularly limited as long as the functional group is UV-curable, and specific examples thereof may include acrylates, methacrylates, vinyls and the like.

Examples of the acrylates include dipentaerythritol hexaacrylate, pentaerythritol tetraacrylate, pentaerythritol triacrylate, trimethylenepropyl triacrylate, ethyleneglycol diacrylate, hexanediol diacrylate, ethyl acrylate, ethylhexyl acrylate, butyl acrylate, hydroxyethyl acrylate and the like.

Examples of the useful acrylate oligomer include a urethane denatured acrylate oligomer, an epoxy acrylate oligomer, an ether acrylate oligomer and the like, and it is preferable that the number of the acrylate functional group is 2 to 6. In connection with this, it is preferable that a molecular weight of the oligomer is in the range of 1,000 to 10,000.

Examples of the methacrylates include trimethylolpropane trimethacrylate, ethyleneglycol dimethacrylate, butanediol dimethacrylate, hexaethyl methacrylate, butyl methacrylate and the like, and a methacrylate oligomer may be used.

Examples of the vinyls include divinyl benzene, styrene, paramethyl styrene and the like.

The b) compound containing a fluorine UV-curable functional group, as a component providing fingerprint trace removability, should include fluorine in order to reduce and remove contamination by oil components such as fingerprints. In addition, it is not particularly limited thereto as long as it has a UV-curable functional group.

In detail, acrylate, methacrylate, and vinyls which include a perfluoro group may be used. In connection with this, it is preferable that the compound containing a fluorine UV-curable functional group has 1 to 6 UV-curable functional groups. In detail, the compound containing a fluorine UV-curable functional group may be selected from the compounds that are represented by the following Formulae 1 to 9, but the scope of the present invention is not limited thereto. If it is a material that has a UV-curable functional group and a fluorine group, it may be used.

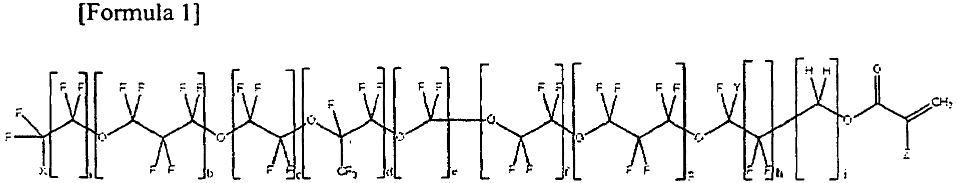

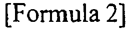

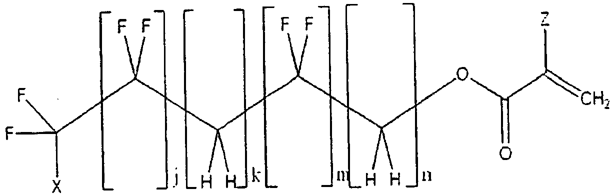

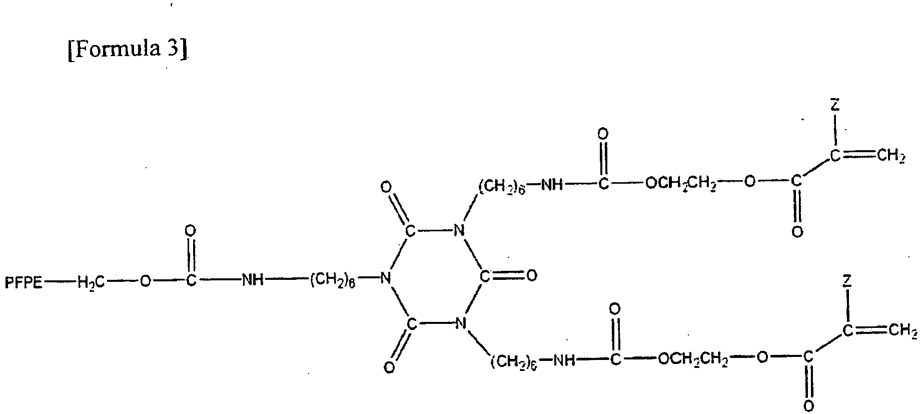

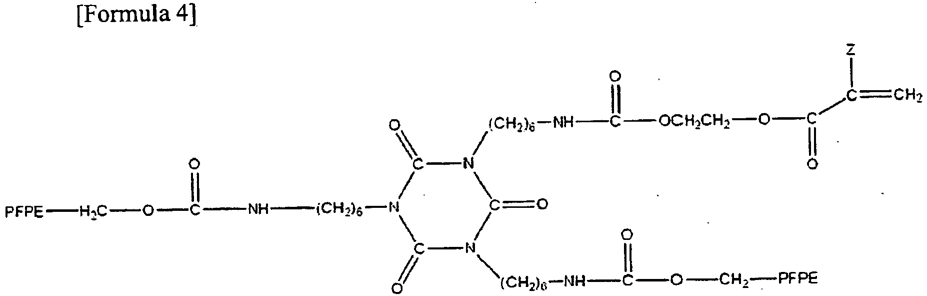

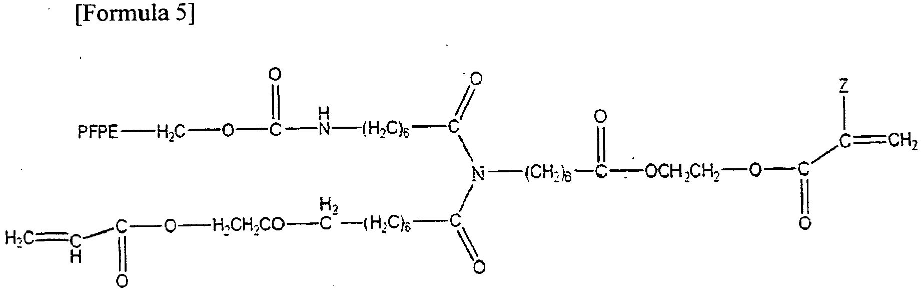

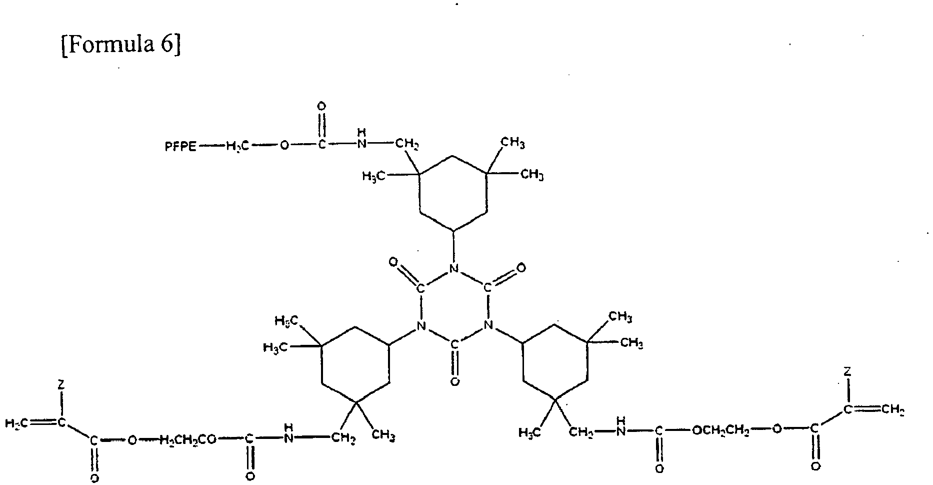

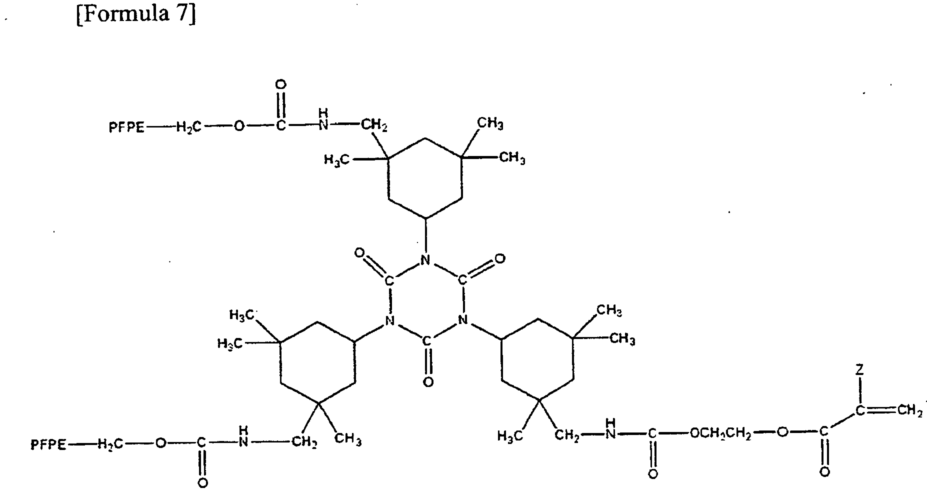

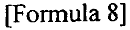

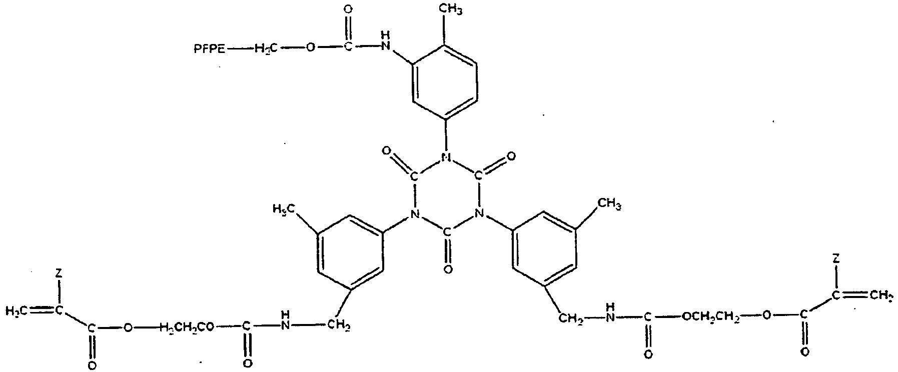

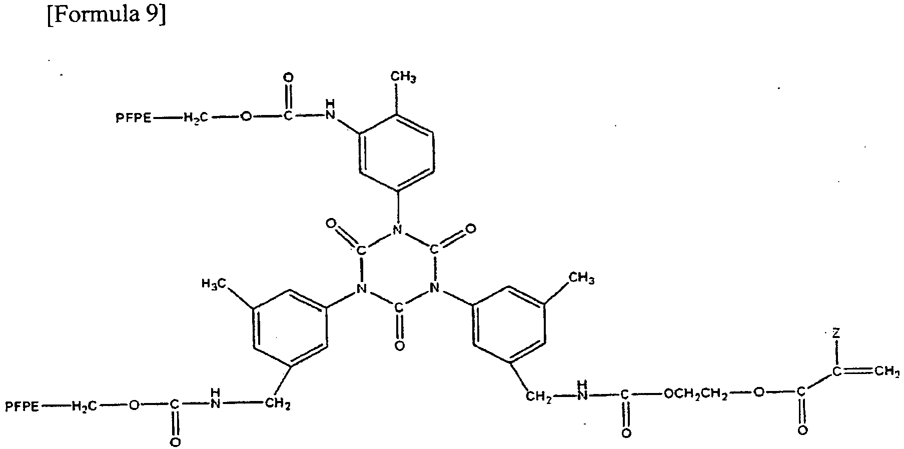

In the above Formulae 1 to 9, X and Y are each independently F or CF₃, Z is H or CH₃, a, j and m are each an integer in the range of 1 to 16, c, k and n are each an integer in the range of 0 to 5, b, d, e, f and g are each an integer in the range of 0 to 200, h and i are each an integer in the range of 0 to 16, and PFPE has the following structure.

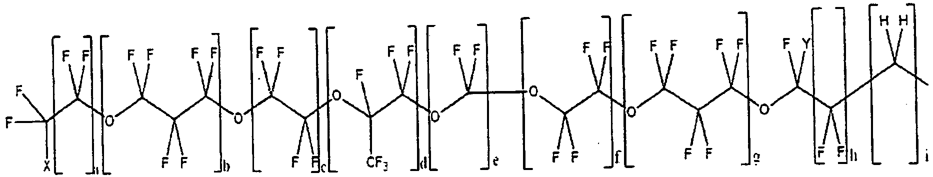

It is preferable that the content of the b) compound containing a fluorine UV-curable functional group is in the range of 0.5 to 20 parts by weight on the basis of 100 parts by weight of the binder resin containing a UV-curable functional group. If the content is less than 0.5 parts by weight, it is difficult to achieve the contamination resistance. If the content exceeds 20 parts by weight, the abrasion resistance may be reduced while the contamination resistance is not further enhanced.

The c) photoinitiator is not particularly limited as long as it is an initiator that is capable of being decomposed by ultraviolet rays. Detailed examples thereof may include Irgacure 127, Irgacure 184, Darocure 1173, and Irgacure 2959 of alpha-hydroxyketones, Irgacure 369, Irgacure 379, Irgacure 907, and Irgacure 1300 of alpha-aminoketones, Irgacure 651 that is benzyl dimethylketal, Darocure TPO that is monoacylphosphine and the like may be used. It is preferable that the content of the c) photoinitiator is in the range of 1 to 20 parts by weight on the basis of 100 parts by weight of the binder resin containing a UV-curable functional group. If the content of the c) photoinitiator is less than 1 part by weight, it is difficult to achieve the abrasion resistance because of a low curing rate. If the content of the c) photoinitiator exceeds 20 parts by weight, the crosslinking density is decreased so that it may result in reduction of the abrasion resistance.

The d) nano-sized particles, as components that impart scribbling resistance to the film in a mixed form with other components of the coating composition according to the present invention, preferably have the average particle size in the range of 0.5 to 50 nm, more preferably in the range of 5 to 50 nm, in order to ensure the optical transparency.

If the particle diameter of the d) nano-sized particles is less than 0.5 nm, the scribbling resistance may be reduced. If the particle diameter is more than 50 nm, an optically opaque coating film may be obtained. In addition, the d) nano-sized particles with the particle diameter of 0.5 nm or more provide excellent scribbling resistance, but the scribbling resistance may be much more enhanced, when the particle diameter is more than 5 nm than when the particle diameter is 0.5 nm.

The d) nano-sized particles may be made of a material selected from silica, alumina, titania, zirconia, magnesium fluoride and the like.

In addition, the d) nano-sized particles may be subjected to the surface treatment in order to improve the compatibility with the a) binder resin containing a UV-curable functional group and the dispersibility of the particles.

For example, the d) nano-sized particles may be subjected to the surface treatment using a material selected from a silane coupling agent, an epoxy compound, a hydroxyl group-containing compound, an isocyanate compound and other dispersing agents.

It is preferable that the content of the d) nano-sized particles is in the range of 0.5 to 50 parts by weight on the basis of 100 parts by weight of the a) binder resin containing a UV-curable functional group. If the content of the d) nano-sized particles is less than 0.5 parts by weight, the scribbling resistance may be reduced. If the content is more than 50 parts by weight, the contamination resistance may be reduced.

The e) conductive inorganic particles, as components that are added to achieve dust removability and antistatic property, preferably have the particle diameter in the range of between 0.5 and 100 nm in order to ensure the optical transparency.

If the particle diameter of the e) conductive inorganic particles is more than 100 nm, an optically opaque coating film may be obtained. If the particle diameter is less than 0.5 nm, the dust removability and the antistatic property may be reduced.

The e) conductive inorganic particles are formed using a conductive metal oxide filler selected from tin-doped indium oxide (ITO), antimony-doped tin oxide (ATO), and antimony-doped zinc oxide (AZO).

In addition, the e) conductive inorganic particles may be subjected to the surface treatment in order to improve the compatibility with the a) binder resin containing a UV-curable functional group and the dispersibility of the particles.

For example, the e) conductive inorganic particles may be subjected to the surface treatment using a material selected from a silane coupling agent, an epoxy compound, a hydroxyl group-containing compound, an isocyanate compound and other dispersing agents.

It is preferable that the content of the e) conductive inorganic particles is in the range of more than 0.5 to 50 or less parts by weight on the basis of 100 parts by weight of the a) binder resin containing a UV-curable functional group. If the content is 0.5 or less parts by weight, it is difficult to achieve the dust removability. If the content is more than 50 parts by weight, the contamination resistance may be reduced.

The coating composition according to the present invention may further include a solvent for a coating property in addition to the above components. The kind and content of the solvent are not particularly limited, but for the coating property, the solvent is preferably used in the range of 10 to 1000 parts by weight on the basis of 100 parts by weight of the a) binder resin containing a UV-curable functional group.

Alcohols, alkanes, ethers, cycloalkanes, aromatic organic solvents or the like may be used as the solvent. In detail, methanol, ethanol, isopropyl alcohol, butanol, ethylene glycol, diacetone alcohol, 2-ethoxy ethanol, 2-methoxy ethanol, 2-butoxy ethanol, propyleneglycol monomethyl ether, hexane, heptane, cyclohexane, acetyl acetone, dimethyl ketone, methyl ethyl ketone, methyl isobutyl ketone, toluene, benzene, xylene, methyl acetate, ethyl acetate, butyl acetate, dimethyl formamide, tetrahydrofurane and the like may be applied, but the scope of the present invention is not limited thereto.

The coating composition according to the present invention may be coated on a substrate. The substrate is not particularly limited, but a plastic film may be used. The film may include polyester, triacetyl cellulose, an olefin copolymer and polymethyl methacrylate.

The coating composition may be coated on a substrate by using a coating method that is generally known in the art, and examples of the type of the coating method include two-roll or three-roll reverse coating, gravure coating, micro gravure coating, die coating, curtain coating, bar coating, dip coating, and flow coating and the like.

It is preferable that the film coated by using the above method is cured by irradiation of ultraviolet rays in an amount of 0.05 to 2 J/cm² after drying, and particularly, when it is cured under a nitrogen atmosphere, the fingerprint trace removability may be improved since the degree of surface curing is increased.

The coating thickness of the coating composition is preferably in the range of 0.5 to 300 µm and more preferably 10 to 300 µm. When the coating thickness is increased, the abrasion resistance is improved, but a winding phenomenon of the film or cracks may occur due to the curing shrinkage.

Meanwhile, the coating film according to the present invention is prepared by using the coating composition according to the present invention so that it may comprise a) a binder resin containing a UV-curable functional group; b) a compound containing a fluorine UV-curable functional group; c) a photoinitiator; d) nano-sized particles; and e) conductive inorganic particles. All of the descriptions in the embodiment are also applied herein.

The coating film that is prepared by using the coating composition according to the present invention has excellent abrasion resistance, and excellent contamination resistance such as fingerprint trace removability and scribbling resistance to easily remove contaminants of oil components such as fingerprints or scribbles, and in particular, excellent dust removability.

The thickness of the coating film according to the present invention is preferably 0.5 to 30 µm, and more preferably 10 to 30 µm.

In addition, a substrate may be provided on at least one side of the coating film according to the present invention.

The coating film according to the present invention may be applied without being limited as long as there are need for the abrasion resistance and the contamination resistance. For example, it may be applied to display devices. The coating film may be directly coated on parts of the object devices such as display devices, or may be applied to the object devices in conjunction with the substrate after it is formed on the substrate. The coating film according to the present invention may be applied to a liquid crystal display, an organic light emitting display (OLED), and a plasma display panel (PDP), but the scope of the present invention is not limited thereto.

Meanwhile, the method for producing a coating film according to the present invention may comprise the steps of coating the coating composition according to the present invention on a substrate; and drying and photocuring the coated coating composition. All of the descriptions in the embodiment are also applied herein.

Meanwhile, the display device according to the present invention may comprise any one selected from a liquid crystal display (LCD), an organic light emitting display (OLED), and a plasma display panel (PDP); and the coating film according to the present invention.

Herein, the coating film formed by coating a substrate with the coating composition may be attached to the display device, or the display device may be directly coated with the coating composition.

Specifically, in order to impart the contamination resistance and abrasion resistance, the coating film formed by coating a substrate with the coating composition may be detachably used in the displays such as mobile phone window or laptop or may be attached to display devices such as a polarizer or a PDP filter.

Examples of the display devices according to the present invention may include displays such as TVs, monitors for computers, laptops, mobile phones and the like, but are not limited thereto.

Specifically, the TVs, monitors for computers, and mobile phones may include a display device; and the coating film according to the present invention that is provided on the surface of the display device. In addition, the display device may be supported by a main body case that forms the external appearance of TVs, monitors for computers, and mobile phones.

The laptop may include a computer main body; and a display main body that is rotatably mounted to the computer main body, and the display main body may include a display device forming images and the coating film according to the present invention that is provided on the surface of the display device. The display device may be supported by a main body case that forms the external appearance of the display main body.

## Claims

1. A coating composition comprising:
a) a binder resin containing a UV-curable functional group;
b) a compound containing a fluorine UV-curable functional group;
c) a photoinitiator;
d) nano-sized particles; and
e) conductive inorganic particles,
wherein the e) conductive inorganic particles are formed using a material selected from tin-doped indium oxide (ITO), antimony-doped tin oxide (ATO), and antimony-doped zinc oxide (AZO).

2. The coating composition according to claim 1, wherein the e) conductive inorganic particles is contained in the range of more than 0.5 to 50 or less parts by weight on the basis of 100 parts by weight of the a) binder resin containing a UV-curable functional group.

3. The coating composition according to claim 1, wherein on the basis of 100 parts by weight of the a) binder resin containing a UV-curable functional group, the content of the b) compound containing a fluorine UV-curable functional group is in the range of 0.5 to 20 parts by weight, the content of the c) photoinitiator is in the range of 1 to 20 parts by weight, the content of the d) nano-sized particles is in the range of 0.5 to 50 parts by weight, and the content of the e) conductive inorganic particles is in the range of more than 0.5 to 50 or less parts by weight.

4. The coating composition according to claim 1, wherein the a) binder resin containing a UV-curable functional group includes multi-functional or mono-functional monomers or oligomers of acrylates, methacrylates, or vinyls.

5. The coating composition according to claim 1, wherein the b) compound containing the fluorine UV-curable functional group includes a compound selected from acrylates, methacrylates and vinyls containing a perfluoro group.

6. The coating composition according to claim 1, wherein the b) compound containing a fluorine UV-curable functional group includes a compound selected from the compounds that are represented by the following Formulae 1 to 9: 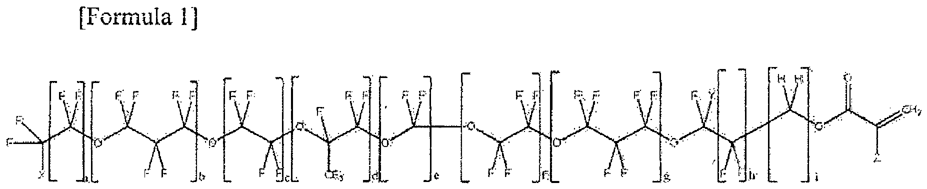 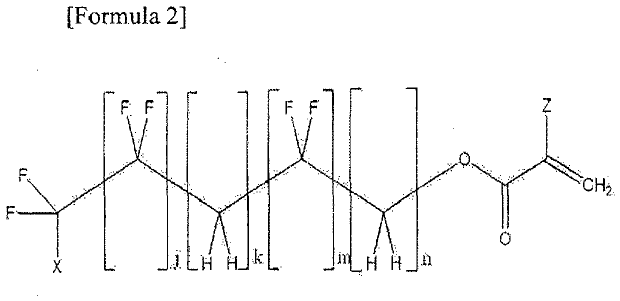 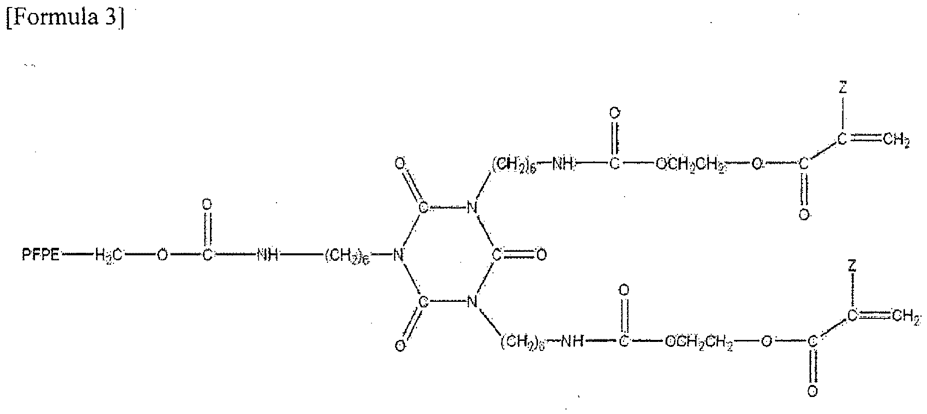 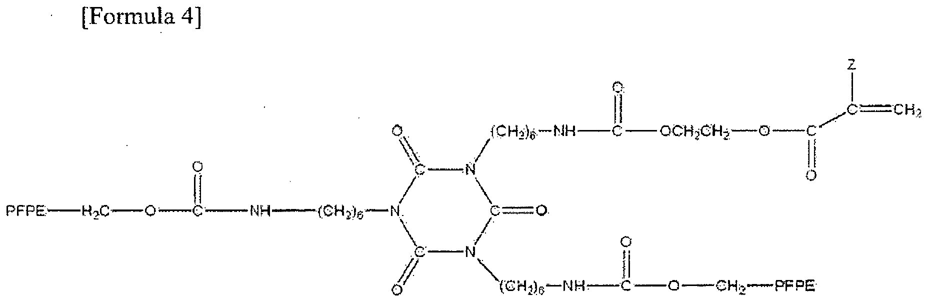 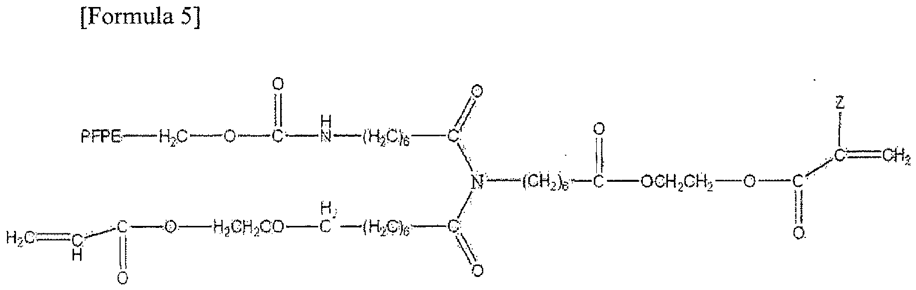 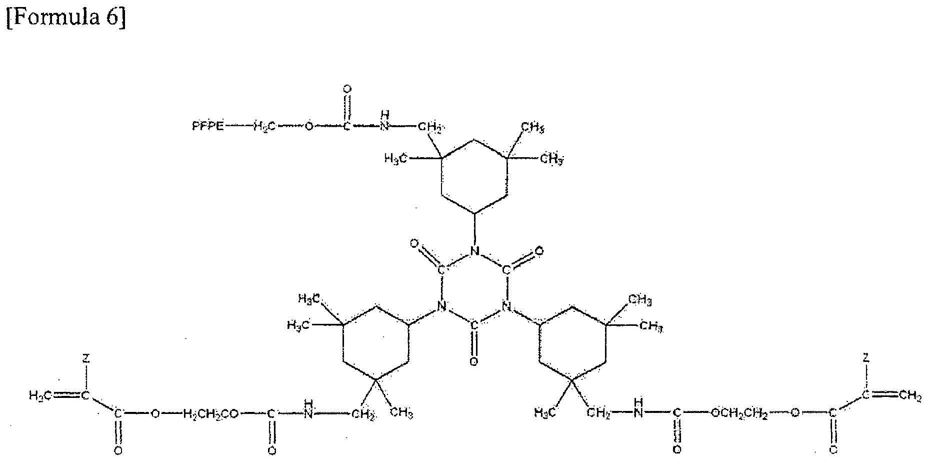 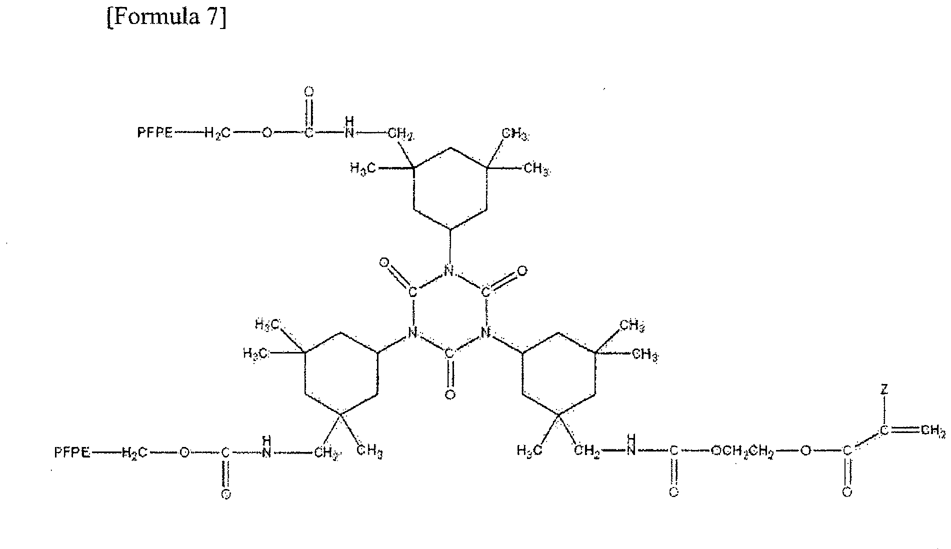 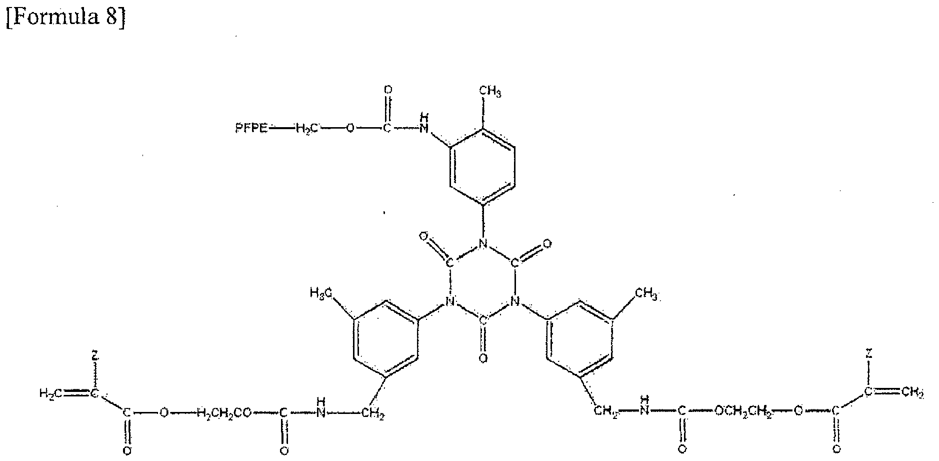 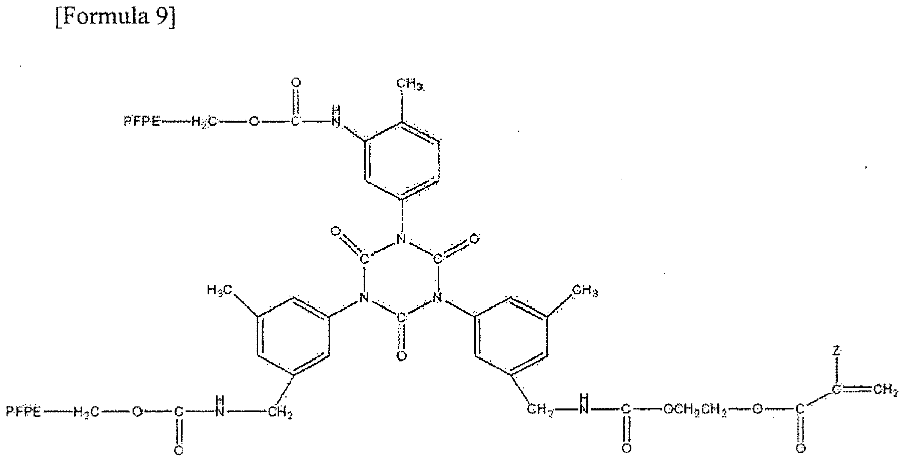 in which Formulae 1 to 9, X and Y are each independently F or CF₃, Z is H or CH₃, a, j and m are each an integer in the range of 1 to 16, c, k and n are each an integer in the range of 0 to 5, b, d, e, f and g are each an integer in the range of 0 to 200, h and i are each an integer in the range of 0 to 16, and PFPE has the following structure.

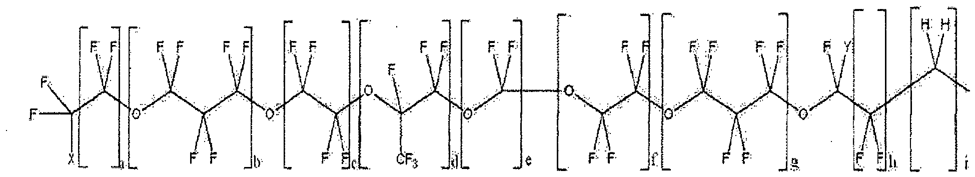

7. The coating composition according to claim 1, wherein a particle diameter of the d) nano-sized particles is in the range of 0.5 to 50 nm.

8. The coating composition according to claim 1, wherein the d) nano-sized particles are selected from silica, alumina, titania, zirconia and magnesium fluoride.

9. The coating composition according to claim 1, wherein the d) nano-sized particles are subjected to surface treatment by using a material selected from a silane coupling agent, an epoxy compound, a hydroxyl group-containing compound and an isocyanate compound.

10. The coating composition according to claim 1, wherein a particle diameter of the e) conductive inorganic particles is in the range of 0.5 to 100 nm.

11. The coating composition according to claim 1, wherein the e) conductive inorganic particles are subjected to surface treatment by using a material selected from a silane coupling agent, an epoxy compound, a hydroxyl group-containing compound and an isocyanate compound.

12. The coating composition according to claim 3, further comprising 10 to 1000 parts by weight of a solvent on the basis of 100 parts by weight of the a) binder resin containing a UV-curable functional group.

13. A coating film prepared by using the coating composition according to any one of claims 1 to 12, comprising: a) a binder resin containing a UV-curable functional group; b) a compound containing a fluorine UV-curable functional group; c) a photoinitiator; d) nano-sized particles; and e) conductive inorganic particles.

14. The coating film according to claim 13, wherein the thickness of the film is in the range of 0.5 to 300 µm.

15. The coating film according to claim 13, wherein a substrate is provided on at least one side of the coating film.

16. . The coating film according to claim15, wherein the substrate is made of a material selected from polyester, triacetyl cellulose, an olefin copolymer and polymethyl methacrylate.

17. A method for producing a coating film, comprising the steps of coating the coating composition according to any one of claims 1 to 12 on a substrate; and drying and photocuring the coated coating composition.

18. The method according to claim 17, wherein the substrate is made of a material selected from polyester, triacetyl cellulose, an olefin copolymer and polymethyl methacrylate.

19. The method according to claim 17, wherein the coating thickness of the coating composition is in the range of 0.5 to 300 µm.

20. The method according to claim 17, wherein the photocuring is performed by using irradiation of ultraviolet rays in an amount in the range of 0.05 to 2 J/cm².

21. A display device comprising the coating film according to claim 13.

22. The display device according to claim 21, wherein the display device includes any one of a liquid crystal display (LCD), an organic light emitting display (OLED), and a plasma display panel (PDP).

## Patentansprüche

1. Beschichtungszusammensetzung, welche umfasst:
a) ein Binderharz enthaltend eine UV-härtbare funktionelle Gruppe;
b) eine Verbindung enthaltend eine UV-härtbare Fluor-funktionelle Gruppe;
c) einen Photoinitiator;
d) Teilchen mit Nanogröße; und
e) leitfähige anorganische Teilchen,
wobei die leitfähigen anorganischen Teilchen e) unter Verwendung eines Materials gebildet sind, das ausgewählt ist aus mit Zinn dotiertem Indiumoxid (ITO), mit Antimon dotiertem Zinnoxid (ATO) und mit Antimon dotiertem Zinkoxid (AZO).

2. Beschichtungszusammensetzung nach Anspruch 1, wobei die leitfähigen anorganischen Teilchen e) in dem Bereich von mehr als 0,5 bis 50 oder weniger Gewichtsteilen auf der Basis von 100 Gewichtsteilen des Binderharzes enthaltend eine UV-härtbare funktionelle Gruppe a) enthalten sind.

3. Beschichtungszusammensetzung nach Anspruch 1, wobei auf der Basis von 100 Gewichtsteilen des Binderharzes enthaltend eine UV-härtbare funktionelle Gruppe a) der Gehalt der Verbindung enthaltend eine UV-härtbare Fluor-funktionelle Gruppe b) im Bereich von 0,5 bis 20 Gewichtsteilen ist, der Gehalt des Photoinitiators c) im Bereich von 1 bis 20 Gewichtsteilen ist, der Gehalt der Teilchen mit Nanogröße d) im Bereich von 0,5 bis 50 Gewichtsteilen ist und der Gehalt der leitfähigen anorganischen Teilchen e) in dem Bereich von mehr als 0,5 bis 50 oder weniger Gewichtsteilen ist.

4. Beschichtungszusammensetzung nach Anspruch 1, wobei das Binderharz enthaltend eine UV-härtbare funktionelle Gruppe a) multifunktionelle oder monofunktionelle Monomere oder Oligomere von Acrylaten, Methacrylaten oder Vinyls einschließt.

5. Beschichtungszusammensetzung nach Anspruch 1, wobei die Verbindung enthaltend die UV-härtbare Fluor-funktionelle Gruppe b) eine Verbindung einschließt, die ausgewählt ist aus Acrylaten, Methacrylaten und Vinyls, die eine Perfluorgruppe enthalten.

6. Beschichtungszusammensetzung nach Anspruch 1, wobei die Verbindung enthaltend eine UV-härtbare Fluor-funktionelle Gruppe b) eine Verbindung einschließt, die ausgewählt ist aus den Verbindungen, die durch die folgenden Formeln 1 bis 9 dargestellt sind: 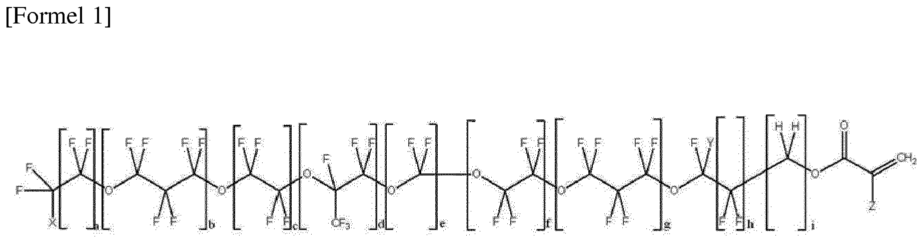 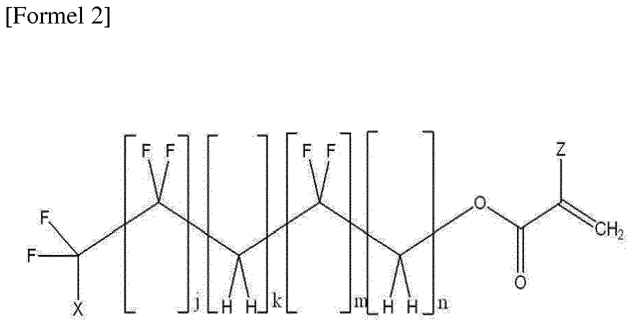 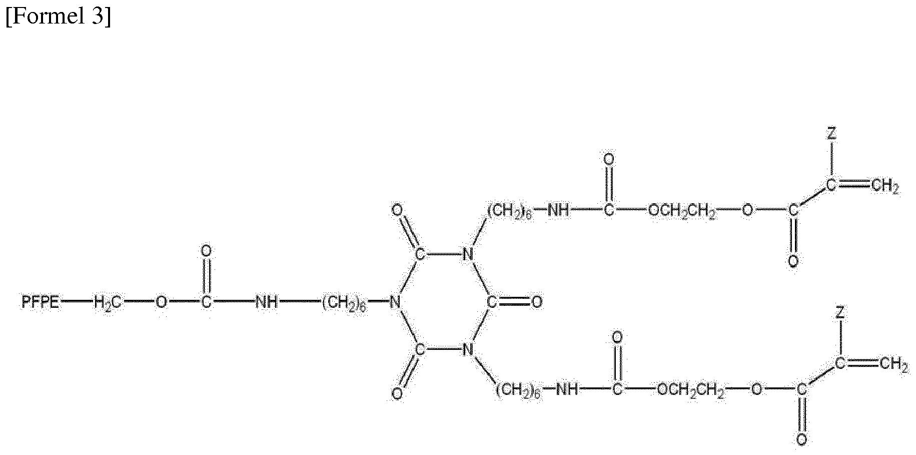 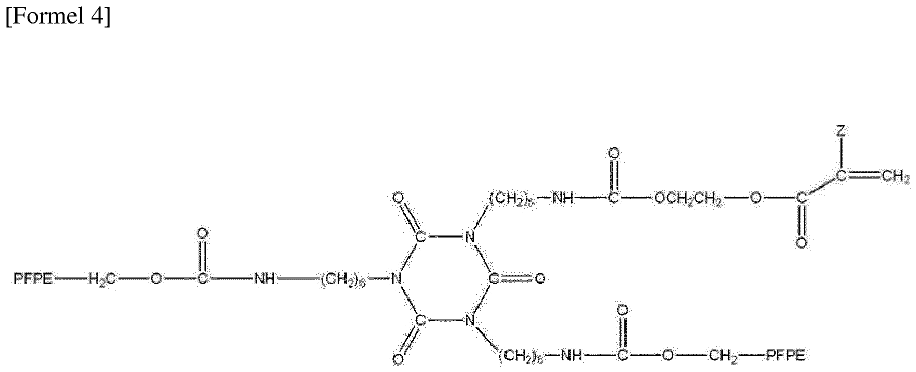 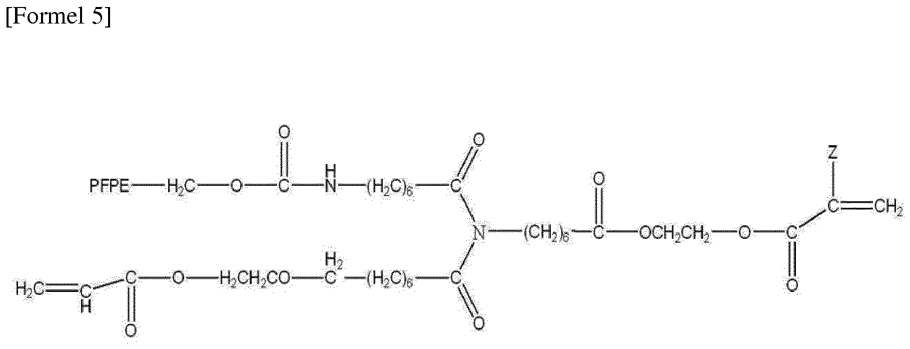 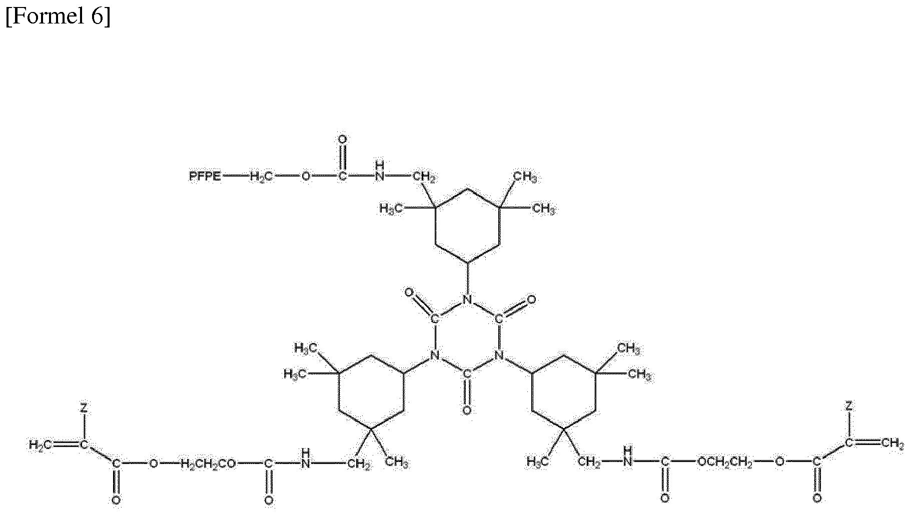 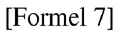 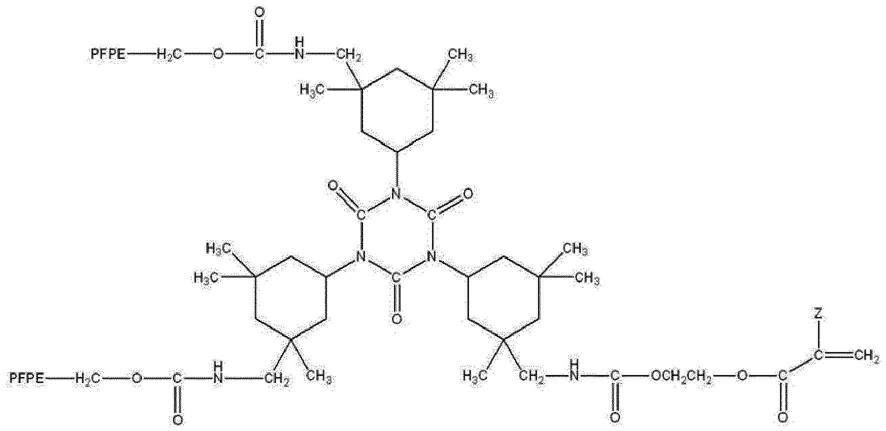 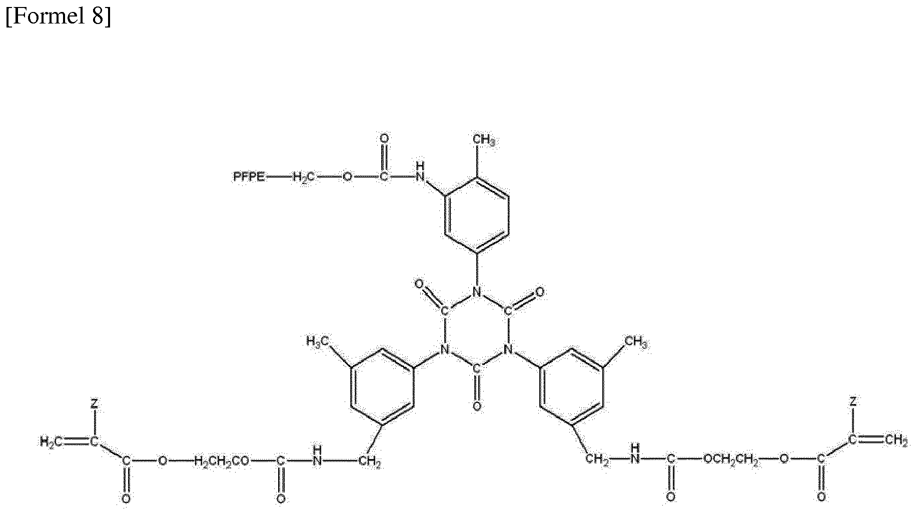 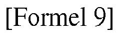 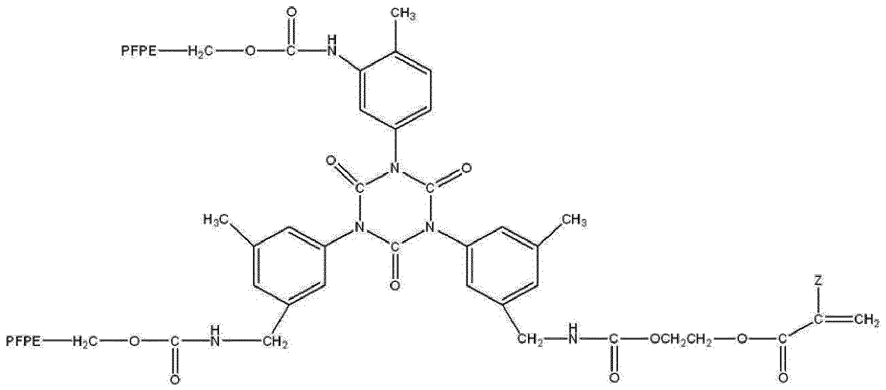 wobei in Formeln 1 bis 9 X und Y jeweils unabhängig F oder CF₃ sind, Z H oder CH₃ ist, a, j und m jeweils eine ganze Zahl im Bereich von 1 bis 16 sind, c, k und n jeweils eine ganze Zahl im Bereich von 0 bis 5 sind, b, d, e, f und g jeweils eine ganze Zahl im Bereich von 0 bis 200 sind, h und i jeweils eine ganze Zahl im Bereich von 0 bis 16 sind und PFPE die folgende Struktur aufweist

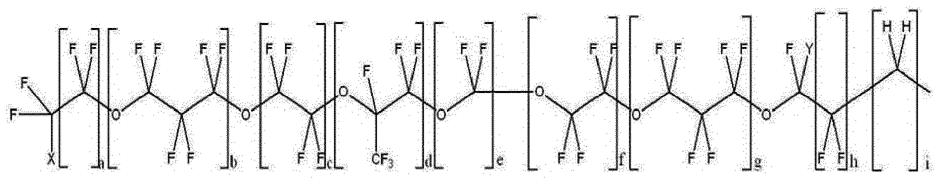

7. Beschichtungszusammensetzung nach Anspruch 1, wobei ein Teilchendurchmesser der Teilchen mit Nanogröße d) im Bereich von 0,5 bis 50 nm ist.

8. Beschichtungszusammensetzung nach Anspruch 1, wobei die Teilchen mit Nanogröße d) ausgewählt sind aus Siliziumoxid, Aluminiumoxid, Titanoxid, Zirkoniumoxid und Magnesiumfluorid.

9. Beschichtungszusammensetzung nach Anspruch 1, wobei die Teilchen mit Nangröße d) einer Oberflächenbehandlung unterzogen worden sind durch Verwendung eines Materials ausgewählt aus einem Silankupplungsagenz, einer Epoxyverbindung, einer Hydroxylgruppen enthaltenden Verbindung und einer Isocyanatverbindung.

10. Beschichtungszusammensetzung nach Anspruch 1, wobei ein Teilchendurchmesser der leitfähigen anorganischen Teilchen e) in dem Bereich von 0,5 bis 100 nm ist.

11. Beschichtungszusammensetzung nach Anspruch 1, wobei die leitfähigen anorganischen Teilchen e) einer Oberflächenbehandlung unterzogen worden sind durch Verwendung eines Materials ausgewählt aus einem Silankopplungsagenz, einer Epoxyverbindung, einer Hydroxylgruppe enthaltenden Verbindung und einer Isocyanatverbindung.

12. Beschichtungszusammensetzung nach Anspruch 3, weiter umfassend 10 bis 1000 Gewichtsteile eines Lösungsmittels auf der Basis von 100 Gewichtsteilen des Binderharzes enthaltend eine UV-härtbare funktionelle Gruppe a).

13. Beschichtungsfilm hergestellt durch Verwendung der Beschichtungszusammensetzung nach einem der Ansprüche 1 bis 12, umfassend: a) ein Binderharz enthaltend eine UV-härtbare funktionelle Gruppe; b) eine Verbindung enthaltend eine UV-härtbare Fluor-funktionelle Gruppe; c) einen Photoinitiator; d) Teilchen mit Nanogröße; und e) leitfähige anorganische Teilchen.

14. Beschichtungsfilm nach Anspruch 13, wobei die Dicke des Films im Bereich von 0,5 bis 300 µm ist.

15. Beschichtungsfilm nach Anspruch 13, wobei ein Substrat auf wenigstens einer Seite des Beschichtungsfilms bereitgestellt ist.

16. Beschichtungsfilm nach Anspruch 15, wobei das Substrat hergestellt ist aus einem Material ausgewählt aus Polyester, Triacetylcellulose, einem Olefincopolymer und Polymethylmethacrylat.

17. Verfahren zum Herstellen eines Beschichtungsfilms umfassend die Schritte eines Beschichtens der Beschichtungszusammensetzung nach einem der Ansprüche 1 bis 12 auf einem Substrat; und Trocknen und Photohärten der beschichteten Beschichtungszusammensetzung.

18. Verfahren nach Anspruch 17, wobei das Substrat hergestellt ist aus einem Material ausgewählt aus Polyester, Triacetylcellulose, einem Olefincopolymer und Polymethylmethacrylat.

19. Verfahren nach Anspruch 17, wobei die Beschichtungsdicke der Beschichtungszusammensetzung in dem Bereich von 0,5 bis 300 µm ist.

20. Verfahren nach Anspruch 17, wobei die Photohärtung durchgeführt wird durch Verwendung einer Bestrahlung von Ultraviolettstrahlen in einer Menge in dem Bereich von 0,05 bis 2 J/cm².

21. Displayvorrichtung umfassend den Beschichtungsfilm nach Anspruch 13.

22. Displayvorrichtung nach Anspruch 21, wobei die Displayvorrichtung irgendeines von einem Flüssigkristalldisplay (LCD), einem organischen lichtemittierenden Display (OLED) und einer Plasmadisplayplatte (PDP) einschließt.

## Revendications

1. Composition de revêtement comprenant :
a) une résine liante contenant un groupe fonctionnel durcissable aux ultraviolets ;
b) un composé contenant un groupe fonctionnel fluoré durcissable aux ultraviolets ;
c) un photoamorceur ;
d) des particules nanométriques ; et
e) des particules minérales conductrices,
dans laquelle e) les particules minérales conductrices sont formées en utilisant une matière sélectionnée parmi l'oxyde d'indium dopé d'étain (ITO), l'oxyde d'étain dopé d'antimoine (ATO) et l'oxyde de zinc dopé d'antimoine (AZO).

2. Composition de revêtement selon la revendication 1, dans laquelle e) les particules minérales conductrices sont contenues dans la plage de plus de 0,5 à 50 parties en poids ou moins par rapport à 100 parties en poids de la a) résine liante contenant un groupe fonctionnel durcissable aux ultraviolets.

3. Composition de revêtement selon la revendication 1, dans laquelle par rapport à 100 parties en poids de la a) résine liante contenant un groupe fonctionnel durcissable aux ultraviolets, la teneur du b) composé contenant un groupe fonctionnel fluoré durcissable aux ultraviolets est dans la plage de 0,5 à 20 parties en poids, la teneur du c) photoamorceur est dans la plage de 1 à 20 parties en poids, la teneur des d) particules nanométriques est dans la plage de 0,5 à 50 parties en poids et la teneur des e) particules minérales conductrices est dans la plage de 0,5 à 50 parties en poids ou moins.

4. Composition de revêtement selon la revendication 1, dans laquelle la a) résine liante contenant un groupe fonctionnel durcissable aux ultraviolets renferme des monomères ou des oligomères multifonctionnels ou monofonctionnels d'acrylates, de méthacrylates ou de vinyles.

5. Composition de revêtement selon la revendication 1, dans laquelle le b) composé contenant le groupe fonctionnel fluoré durcissable aux ultraviolets renferme un composé sélectionné parmi des acrylates, des méthacrylates et des vinyles contenant un groupe perfluoro.

6. Composition de revêtement selon la revendication 1, dans laquelle le b) composé contenant un groupe fonctionnel fluoré durcissable aux ultraviolets renferme un composé sélectionné parmi les composés qui sont représentés par les Formules 1 à 9 suivantes : 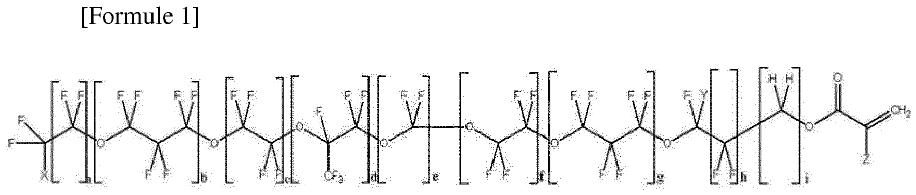 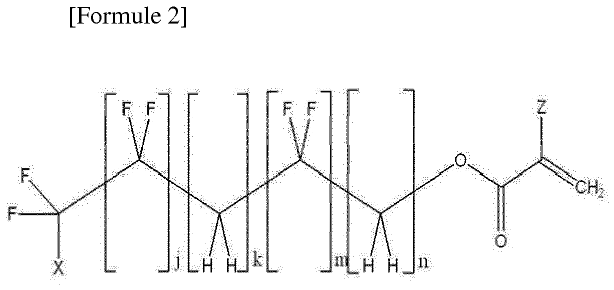 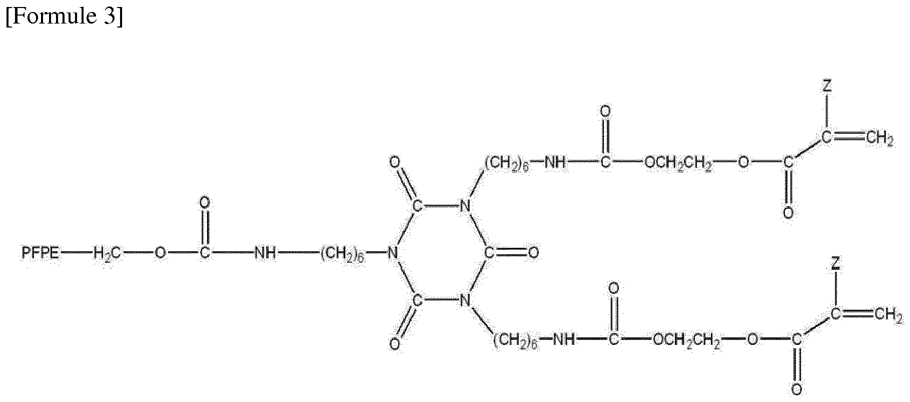 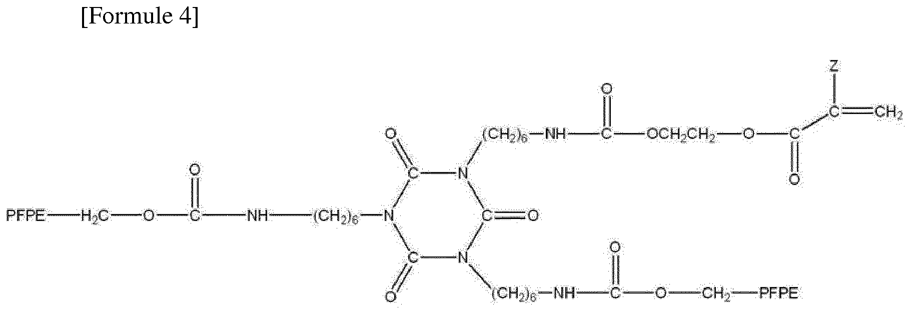 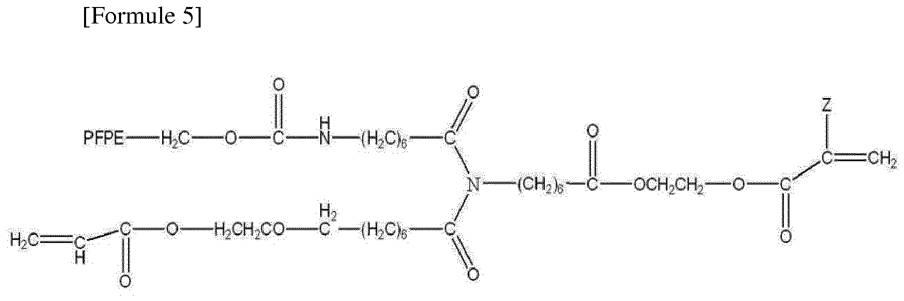 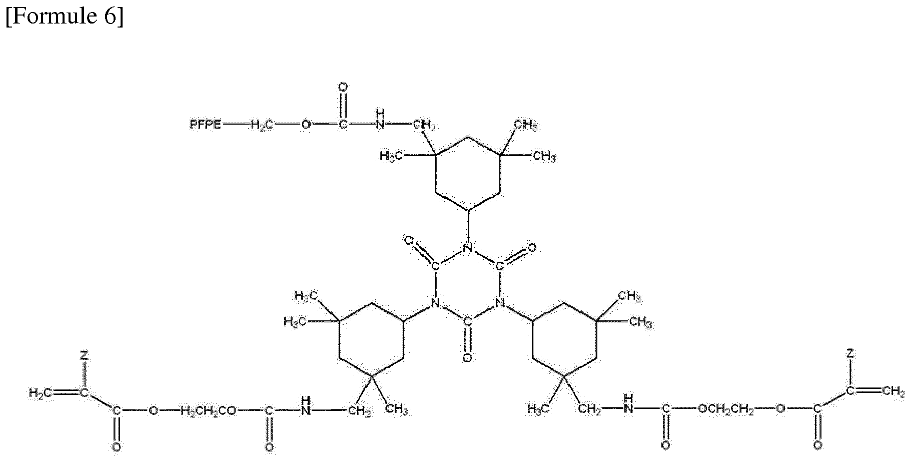 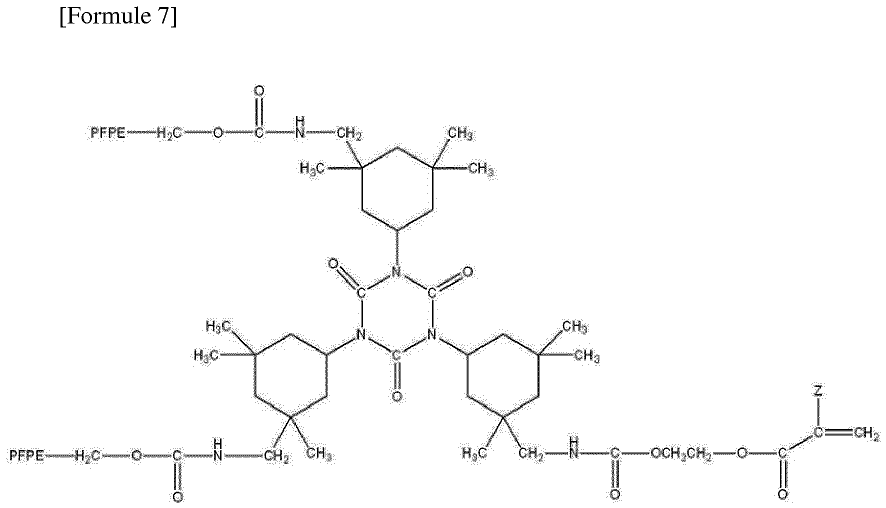 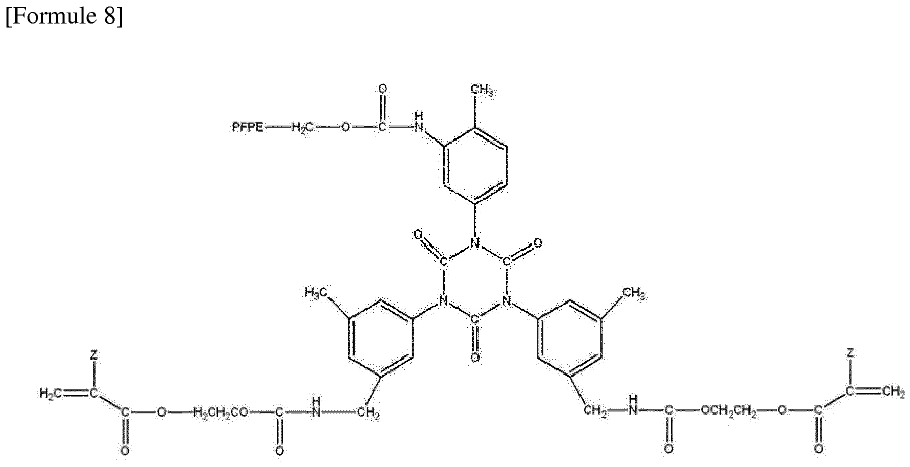 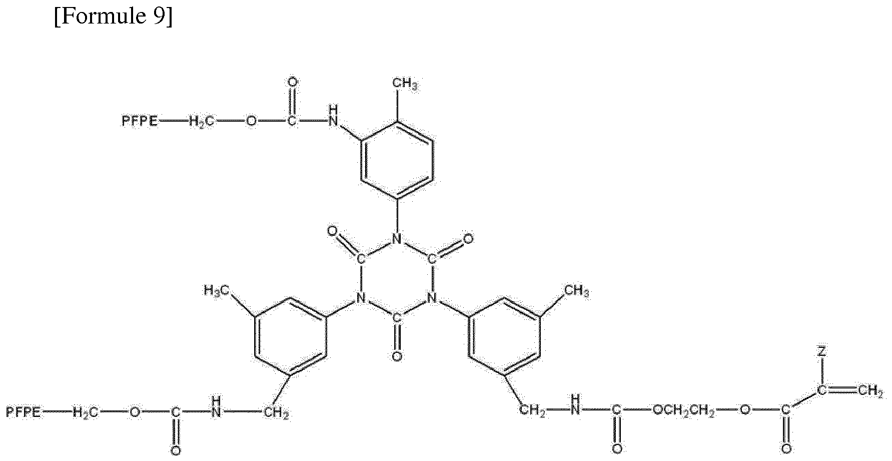 dans lesquelles Formules 1 à 9, X et Y représentent chacun indépendamment F ou CF₃, Z est H ou CH₃, a, j et m représentent chacun un entier dans la plage de 1 à 16, c, k et n désignent chacun un entier dans la plage de 0 to 5, b, d, e, f et g désignent chacun un entier dans la plage de 0 à 200, h et i représentent chacun un entier dans la plage de 0 à 16 et PFPE a la structure suivante.

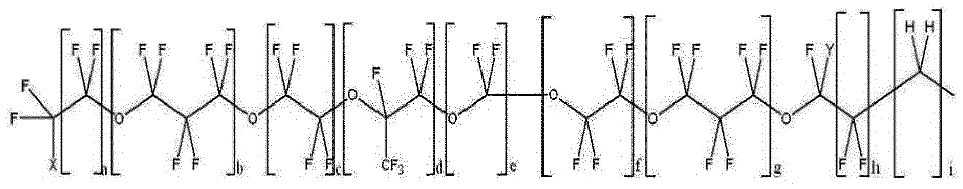

7. Composition de revêtement selon la revendication 1, dans laquelle un diamètre de particules des d) particules nanométriques est dans la plage de 0,5 à 50 nm.

8. Composition de revêtement selon la revendication 1, dans laquelle les d) particules nanométriques sont sélectionnées parmi silice, alumine, titane, zircone et fluorure de magnésium.

9. Composition de revêtement selon la revendication 1, dans laquelle les d) particules nanométriques sont soumises à un traitement de surface en utilisant une matière sélectionnée parmi un agent de couplage silané, un composé époxydique, un composé porteur d'hydroxyle et un composé à base d'isocyanate.

10. Composition de revêtement selon la revendication 1, dans lequel un diamètre de particules des e) particules minérales conductrices est dans la plage de 0,5 à 100 nm.

11. Composition de revêtement selon la revendication 1, dans laquelle les e) particules minérales conductrices sont soumises à un traitement de surface en utilisant une matière sélectionnée parmi un agent de couplage silané, un composé époxydique, un composé porteur d'un groupe hydroxyle et un composé à base d'isocyanate.

12. Composition de revêtement selon la revendication 3, comprenant en outre 10 à 1000 parties en poids d'un solvant par rapport à 100 parties en poids de la a) résine liante contenant un groupe fonctionnel durcissable aux ultraviolets.

13. Film de revêtement préparé en utilisant la composition de revêtement selon l'une quelconque des revendications 1 à 12, comprenant : a) une résine liante renfermant un groupe fonctionnel durcissable aux ultraviolets ; b) un composé renfermant un groupe fonctionnel fluoré durcissable aux ultraviolets ; c) un photoamorceur ; d) des particules nanométriques ; et des e) particules minérales conductrices.

14. Film de revêtement selon la revendication 13, dans lequel l'épaisseur du film est dans la plage de 0,5 à 300 µm.

15. Film de revêtement selon la revendication 13, dans lequel un substrat est fourni sur au moins un côté du film de revêtement.

16. Film de revêtement selon la revendication 15, dans lequel le substrat est constitué d'une matière sélectionnée parmi le polyester, le triacétate de cellulose, le copolymère oléfinique et le méthacrylate de polyméthyle.

17. Procédé de production d'un film de revêtement, comprenant les étapes consistant à revêtir la composition de revêtement selon l'une quelconque des revendications 1 à 12 sur un substrat ; et à sécher et à photopolymériser la composition de revêtement revêtue.

18. Procédé selon la revendication 17, dans lequel le substrat est constitué d'une matière sélectionnée parmi le polyester, le triacétate de cellulose, le copolymère oléfinique et le méthacrylate de polyméthyle.

19. Procédé selon la revendication 17, dans lequel l'épaisseur du revêtement de la composition de revêtement est dans la plage de 0,5 à 300 µm.

20. Procédé selon la revendication 17, dans lequel le photodurcissement est réalisé par l'utilisation d'une irradiation par rayons ultraviolets selon une quantité se situant dans la plage de 0,05 à 2 J/cm².

21. Dispositif d'affichage comprenant le film de revêtement selon la revendication 13.

22. Dispositif d'affichage selon la revendication 21, dans lequel le dispositif d'affichage comprend l'un quelconque d'un affichage à cristaux liquides (LCD), d'un affichage électroluminescent organique (OLED) et d'un écran à plasma (PDP).
